# EUROPÄISCHE PATENTSCHRIFT

(11) **EP 3 034 332 B1**
(45) Veröffentlichungstag und Bekanntmachung des Hinweises auf die Patenterteilung: **31.03.2021**
(21) Anmeldenummer: 15187010.2
(22) Anmeldetag: 28.09.2015
(51) Int. Cl.: B60C 11/11, B60C 11/12

(54) **FAHRZEUGLUFTREIFEN**
PNEUMATIC TYRES FOR A VEHICLE
PNEUMATIQUES DE VÉHICULE

(30) Priorität: 18.12.2014 DE 102014226453
(43) Veröffentlichungstag der Anmeldung: 22.06.2016
(73) Patentinhaber: Continental Reifen Deutschland GmbH, 30165 Hannover (DE)
(72) Erfinder: Heinhaupt, Torsten, 29313 Hambühren (DE)
(74) Vertreter: Continental Corporation

(56) Entgegenhaltungen:
- EP-A2- 0 933 235
- WO-A1-2013/048682
- WO-A1-2014/051528
- WO-A1-2014/064936

## Beschreibung

Die Erfindung betrifft einen Fahrzeugluftreifen, insbesondere für den Einsatz unter winterlichen Fahrbedingungen, mit einem Laufstreifen, welcher zumindest eine Profilblockreihe aufweist, deren Profilblöcke in Umfangsrichtung durch Querrillen voneinander getrennt sind, wobei Profilblöcke mit zumindest zwei Einschnitten vorgesehen sind, die sich zumindest im Wesentlichen parallel zueinander und zu den von den Querrillen begrenzten Profilblockkanten erstrecken, wobei Profilblöcke mit Einschnitten vorgesehen sind, die jeweils ausgehend von einer in Erstreckungsrichtung des Einschnittes verlaufenden Mittellinie abwechselnd einen in die eine Umfangsrichtung und einen in die andere Umfangsrichtung weisenden, entlang der Seiten und der einen Grundlinie eines im Wesentlichen gleichschenkeligen Trapezes verlaufenden Abschnitt aufweisen, wobei die Mittellinie die zweite, längere Grundlinie der Trapeze bildet.

Fahrzeugluftreifen, die für einen Einsatz unter winterlichen Fahrbedingungen vorgesehen sind, weisen meist Laufstreifen auf, deren Profilblöcke in Wellen- bzw. Zickzackform verlaufende Einschnitte aufweisen. Solche Einschnitte sind vor allem dazu gut geeignet, die Griffeigenschaften des Laufstreifens auf winterlichen Fahrbahnen, wie auf Schnee, Schneematsch oder Eis, zu verbessern und haben durch ihre Form auch eine stabilisierende Wirkung auf die Profilblöcke.

Ein Fahrzeugluftreifen der eingangs genannten Art ist beispielsweise aus der WO 2014/064936 A1 bekannt. Dieser Fahrzeugluftreifen weist einen Laufstreifen mit mehreren Profilblockreihen auf, deren Profilblöcke in Umfangsrichtung durch Querrillen voneinander getrennt sind. Die Profilblöcke sind mit Einschnitten versehen, die trapezförmig verlaufende Abschnitte aufweisen, wobei die entlang der Seiten der "Trapeze" verlaufenden Teilabschnitte miteinander jeweils einen kleinen spitzen Winkel einschließen. Dadurch weisen die Einschnitte in ihrem Verlauf relativ ausgeprägte Spitzen auf. Aus WO 2014/051528 A1, der EP 0 933 235 A2 und der WO 2013/048682 A1 sind weitere Fahrzeugluftreifen mit Laufstreifen mit Einschnitten mit trapezförmig verlaufende Abschnitten bekannt, deren entlang der Seiten der Trapeze befindlichen Teilabschnitte miteinander einen spitzen oder ein rechten Winkel einschliessen.

Ein Fahrzeugluftreifen mit wellenförmig verlaufenden Einschnitten in Profilblöcken ist beispielsweise aus der EP 1 529 662 A1 bekannt. Diese Einschnitte sind derart ausgeführt; dass die Amplitude ihrer Wellenform in eine der Erstreckungsrichtungen der Einschnitte zunimmt. Dadurch soll auf die Stabilität bzw. Steifigkeit des Profilblockes beim Auftreten von Umfangs- und Querkräften gezielt Einfluss genommen werden können.

Es ist bekannt, dass bei wellen- oder zickzackförmig verlaufenden Einschnitten im Bereich der Spitzen des Zickzack bzw. der Wellenberge beim Belasten der Profilblöcke beim Abrollen des Reifens Druckspitzen entstehen. Diese Druckspitzen haben den nachteiligen Effekt, dass weniger Kraft vom Laufstreifen auf den Untergrund übertragen werden kann und erhöhen zudem lokal die Temperatur am Untergrund, sodass auf eisigen Oberflächen Eis lokal aufgeschmolzen wird. Der dadurch gebildete Wasserfilm vermindert die Reibung zwischen den Profilblöcken und dem Untergrund, sodass die Kraftübertragung vom Laufstreifen auf die Straße bzw. den Untergrund beeinträchtigt wird. Bei gerade verlaufenden Einschnitten treten diese Effekte kaum bzw. nicht auf, diese sind jedoch in Folge des fehlenden Formschlusses zwischen den Profilblockelementen der Profilblöcke ungünstig, da sie die Profilblocksteifigkeit verringern, was wiederum schlechtere Handlingeigenschaften zur Folge hat.

Der Erfindung liegt die Aufgabe zu Grunde, bei einem Fahrzeugluftreifen der eingangs genannten Art Einschnitte in Profilblöcken des Laufstreifens derart auszuführen, dass ein guter Selbstverzahnungseffekt der Profilblockelemente durch die Einschnitte gegeben ist, wobei die Einschnitte derart ausgeführt sein sollen, dass eine weitgehend gleichmäßige Druckverteilung über die Profilblockelemente erzielt werden kann, wobei vor allem die Reibung des Laufstreifens auf eisigem Untergrund erhöht werden soll, um derart auch die Brems- und Traktionseigenschaften des Fahrzeugluftreifens auf Eis zu verbessern.

Gelöst wird die gestellte Aufgabe erfindungsgemäß dadurch, dass entlang der Seiten der Trapeze Teilabschnitte des Abschnittes des Einschnittes verlaufen, welche miteinander einen Winkel von 110° bis 130° einschließen.

Im Verlauf erfindungsgemäß ausgeführter Einschnitte sind daher ausgeprägte Spitzen zwischen Einschnittabschnitten vermieden, insbesondere verlaufen die Abschnitte der Einschnitte überwiegend in Erstreckungsrichtung bzw. parallel zur Erstreckungsrichtung der Einschnitte. Es sind daher im Verlauf der Einschnitte Stellen vermieden, wo lokal Druckspitzen entstehen können. Dadurch verteilt sich der beim Abrollen des Reifens der auf die Profilblöcke ausgeübte Druck gleichmäßig auf die einzelnen Profilblockelemente. Der insgesamt geringere Druck vermindert das Aufschmelzen von Eis auf eisigem Untergrund und führt somit dazu, dass weniger Schmelzwasser entsteht, sodass die Reibung zwischen den Profilblöcken und der Fahrbahnoberfläche verbessert wird. Damit einher geht auch eine Verbesserung der Brems- und Traktionseigenschaften. Die Handlingeigenschaften bleiben gut erhalten, da nach wie vor ein guter Formschluss der einzelnen Profilblockelemente gegeben ist. Die entlang der Seiten der Trapeze verlaufenden Teilabschnitte des Einschnittes, welche miteinander einen Winkel von 110° bis 130° einschließen, sind für einen guten Selbstverzahnungseffekt durch die Einschnitte besonders vorteilhaft und erlaubt gleichzeitig eine gleichmäßige Druckverteilung auf die einzelnen Profilblockelemente.

In diesem Zusammenhang ist es ferner vorteilhaft, wenn gemäß einem weiteren Merkmal der Erfindung entlang der Grundlinie der Trapeze jeweils ein Teilabschnitt des Einschnittes verläuft, welcher eine Länge von 3,5 mm bis 6,5 mm aufweist.

Für einen guten Formschluss der einzelnen Profilblockelemente ist es ferner besonders günstig, wenn die trapezförmig verlaufenden Abschnitte unmittelbar aneinander anschließen, wobei ihre ineinander übergehenden Teilabschnitte einen einheitlich gerade verlaufenden Abschnitt bilden.

Weitere Merkmale, Vorteile und Einzelheiten der Erfindung werden nun anhand der Zeichnung, die schematisch ein Ausführungsbeispiel darstellt, näher beschrieben. Dabei zeigen
Fig. 1 eine Draufsicht auf eine Teilabwicklung eines Laufstreifens eines Fahrzeugluftreifens und
Fig. 2 einen Profilblock aus Fig. 1 in vergrößerter Darstellung.

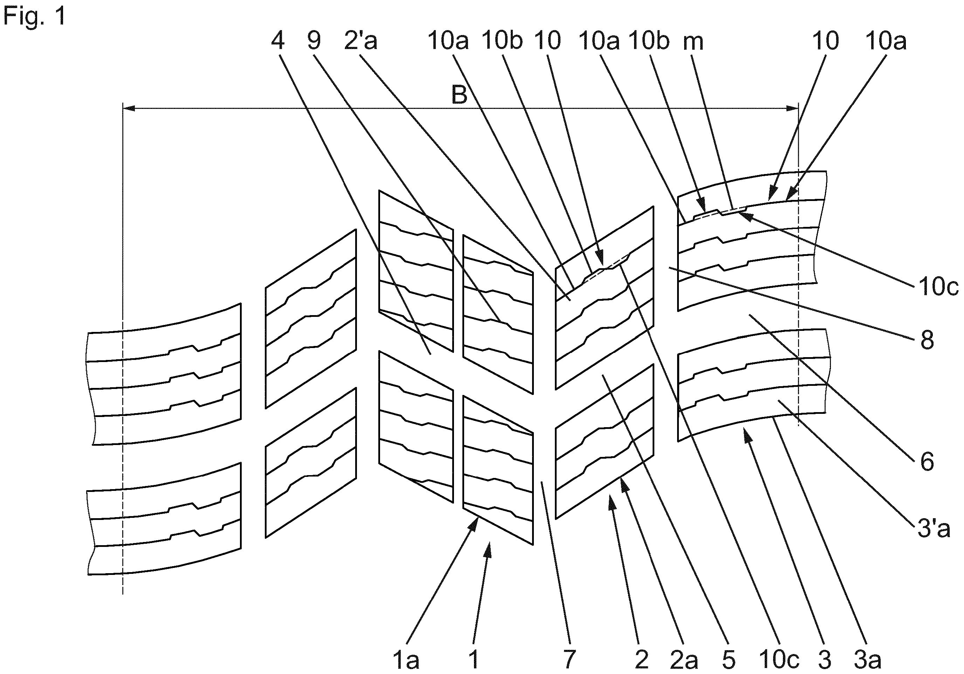

Der in Fig. 1 gezeigte Laufstreifen ist ein Laufstreifen für Winterreifen oder Ganzjahresreifen von Personenkraftwagen, Vans oder dergleichen. Mit B ist jene Breite des Laufstreifens bezeichnet, über welche der Reifen beim Abrollen mit dem Untergrund in Kontakt tritt. B entspricht daher der Breite des bodenberührenden Teils des Laufstreifens und gemäß E.T.R.T.O.-Standards der Breite des statisch ermittelten Footprints (Last bei 70 % der Tragfähigkeit bei einem Innendruck von 2,5 bar, Innendruck 85 % von 2,5 bar).

Beim dargestellten Ausführungsbeispiel weist der Laufstreifen in jeder Laufstreifenhälfte drei Blockreihen 1, 2, 3 - je eine zentrale Blockreihe 1, eine mittlere Blockreihe 2 und eine schulterseitige Blockreihe 3 - auf, welche durch Querrillen 4, 5 und 6 sowie durch Umfangsrillen 7 und 8 in Profilblöcke 1a, 2a und 3a gegliedert sind. Unter Querrillen sind solche Rillen zu verstehen, welche die Profilblöcke 1a, 2a, 3a innerhalb einer Blockreihe 1, 2, 3 in Umfangsrichtung voneinander trennen, wobei Querrillen üblicherweise eine Erstreckungsrichtung aufweisen, die um bis zu 45° von der axialen Richtung abweicht. Die Querrillen 4, 5 in den zentralen und den mittleren Blockreihen 1, 2 verlaufen bei der gezeigten Ausführung gerade, die Querrillen 6 in den schulterseitigen Blockreihen 3 leicht bogenförmig. In der in Fig. 1 gezeigten schematischen Ausführung des Laufstreifens sind daher die Querrillen 4 und 5 in den zentralen und den mittleren Blockreihen 1, 2 von im Wesentlichen gerade verlaufenden Profilblockkanten begrenzt, die Querrillen 6 in den schulterseitigen Blockreihen 3 von leicht bogenförmig verlaufenden Profilblockkanten. Insbesondere die Querrillen 4 in den beiden zentralen Blockreihen 1 können auch in einer Art Zickzackform verlaufen und Abschnitte aufweisen, die unter einem größeren Winkel als 45° zur axialen Richtung verlaufen. Die Umfangsrillen 7 und 8 sind beispielhaft als gerade in Umfangsrichtung umlaufende Rillen dargestellt, können jedoch auch wellen- oder zickzackförmig, durch entsprechend ausgebildete Profilblockkanten begrenzt, verlaufen.

In jedem Profilblock 1a ist jeweils eine Anzahl von Einschnitten 9, in jedem Profilblock 2a und 3a ist jeweils eine Anzahl von Einschnitten 10 ausgebildet, wobei sich die Einschnitte 10 in den Profilblöcken 2a und 3a der mittleren und der schulterseitigen Profilblockreihen 2, 3 zumindest im Wesentlichen parallel zu den die Querrillen 5, 6 begrenzenden Profilblockkanten erstrecken. Die Einschnitte 9 in den Profilblöcken 1a der zentralen Blockreihen 1 erstrecken sich unter einem kleineren Winkel zur axialen Richtung als ihre die Querrillen 4 begrenzenden Profilblockkanten.

Sämtliche Einschnitte 9 und 10 durchqueren bei der dargestellten Ausführungsform die jeweiligen Profilblöcke 1a, 2a, 3a und weisen insbesondere eine Breite von 0,4 mm bis 0,6 mm auf, ihre Tiefe entspricht höchstens der maximal vorgesehenen Profiltiefe, welche bei Reifen für Personenkraftwagen zwischen 6 mm und 8,5 mm gewählt wird. Dabei können die Einschnitte 9 und 10 Abschnitte unterschiedlicher Tiefen aufweisen.

Nachdem die vorgesehenen Profilstrukturen - die Profilblöcke 1a, 2a, 3a sowie die Querrillen 4, 5, 6 und die Umfangsrillen 7, 8 - wie es üblich ist, nach einem Verfahren der Pitchlängenvariation geräuschoptimiert ausgeführt sind, sodass sie unterschiedliche Umfangserstreckungen bzw. Umfangslängen aufweisen, sind in den Profilblöcken 1a, 2a und 3a unterschiedliche Anzahlen von Einschnitten 9 und 10 ausgebildet. Das Pitchlängenvariationsverfahren ist nicht Gegenstand der Erfindung, sodass auf dieses nicht näher eingegangen wird.

Bei der dargestellten Ausführungsform sind die Einschnitte 10 in den Profilblöcken 2a und 3a der mittleren und der schulterseitigen Blockreihen 2 und 3 gemäß der Erfindung ausgestaltet. In Folge der Pitchlängenvariation sind entweder zwei Einschnitte 10 (in Blöcken 2a und 3a mit kleinerer Umfangslänge) oder drei Einschnitte 10 (in Blöcken 2a und 3a mit größerer Umfangslänge) vorgesehen. Die Einschnitte 10 erstrecken sich innerhalb der Profilblöcke 2a, 3a derart, dass sie zueinander und zu den von den Querrillen 5, 6 begrenzten Profilblockkanten zumindest im Wesentlichen gleich große Abstände aufweisen und derart Profilblockelemente 2'a bzw. 3'a begrenzen.

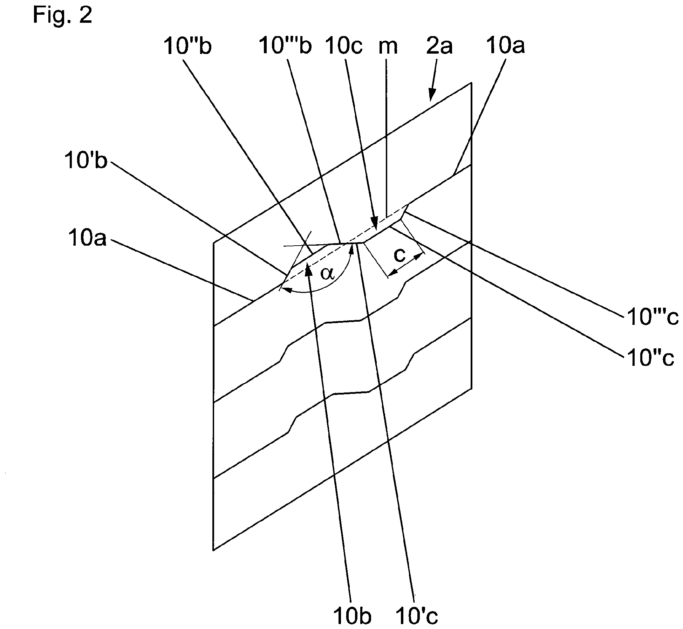

Die Einschnitte 10 weisen, in Draufsicht betrachtet, Abschnitte mit einem besonderen Verlauf auf. Wie insbesondere Fig. 2 anhand der vergrößerten Darstellung einer Draufsicht auf einen Profilblock 2a aus einer mittleren Blockreihe 2 zeigt, verläuft in der Erstreckungsrichtung jedes Einschnittes 10 seine Mittellinie m, entlang welcher Einschnittabschnitte 10a verlaufen, welche die seitlichen Endabschnitte des Einschnittes 10 sind, die zu den die Umfangsrillen 7 und 8 begrenzenden Profilblockkanten verlaufen. Zwischen den Abschnitten 10a verlaufen Abschnitte 10b, 10c, die sich jeweils aus Teilabschnitten 10'b, 10"b, 10'''b und 10'c, 10"c und 10'''c zusammensetzen und insgesamt trapezförmig von der Mittellinie m abweichend verlaufen, der Abschnitt 10b in die eine Umfangsrichtung und der Abschnitt 10c in die andere Umfangsrichtung weisend. Die Teilabschnitte 10b, 10"b, 10'''b und 10'c, 10"c und 10'''c bilden mit einem Abschnitt der Mittellinie m jeweils ein im Wesentlichen gleichschenkeliges Trapez, wobei der Mittellinienabschnitt die längere Grundlinie der Trapezform ist und die Teilabschnitte 10"b und 10"c jeweils entlang der kürzeren Grundlinie der Trapezform verlaufen. Die entlang der Seiten der Trapezform verlaufenden Teilabschnitte 10'b und 10'''b sowie 10'c und 10'''c schließen miteinander einen Winkel α ein, welcher 110° bis 130°, insbesondere etwa 120°, beträgt. Die Länge c der Teilabschnitte 10"b und 10"c beträgt jeweils zwischen 3,5 mm und 6,5 mm, insbesondere etwa 5 mm. Bei der gezeigten Ausführung schließen die Abschnitte 10b und 10c unmittelbar aneinander an, wobei ihre ineinander übergehenden Teilabschnitte 10'''b und 10'c einen einheitlich geraden Abschnitt im Einschnittverlauf bilden. Die Einschnitte 10 in den Profilblöcken 3a der schulterseitigen Blockreihen 3 sind auf analoge Weise mit Abschnitten 10a, die entlang der Mittellinie m des jeweiligen Einschnittes 10 verlaufen, und mit zwei Abschnitten 10b und 10c mit trapezförmigem Verlauf versehen.

Bei einer weiteren, nicht dargestellten Ausführungsform der Erfindung können die Einschnitte 10 mehr als zwei, insbesondere bis zu fünf, trapezförmig verlaufende Abschnitte aufweisen, die von der Mittellinie m abwechselnd in die eine und in die andere Umfangsrichtung weisen. Es ist ferner möglich, zwischen den trapezförmig verlaufenden Abschnitten 10b und 10c kurze Zwischenabschnitte vorzusehen, die insbesondere entlang der Mittellinie m verlaufen.

Durch die besondere Ausgestaltung des Verlaufes der Einschnitte 10 bleibt eine gute Selbstverzahnung der Profilblockelemente 2'a, 3'a in den Profilblöcken 2a, 3a erhalten, wobei durch den besonderen Verlauf der Einschnitte 10 das Entstehen von Druckspitzen weitgehend vermieden wird. Der beim Abrollen des Reifens durch das "Verbiegen" der Profilblockelemente 2'a, 3'a entstehende Druck wird durch den erfindungsgemäßen Verlauf der Einschnitte 10 wesentlich gleichmäßiger auf die Profiblockelemente 2'a, 3'a verteilt. Durch diese gleichmäßigere Druckverteilung wird auf die Kontaktfläche des Reifens zum Untergrund lokal weniger Druck aufgebracht. Dies führt zu einer geringeren Temperaturerhöhung in der Kontaktfläche, sodass auf eisigem Untergrund weniger Eis aufgeschmolzen wird und der Reibschluss zwischen den Blockoberflächen und der Fahrbahnoberfläche bzw. dem Eis verbessert wird.

### Bezugsziffernliste

- 1, 2, 3 ........................: Blockreihe
- 1a, 2a, 3a...................: Profilblock
- 2'a, 3'a......................: Profilblockelement
- 4, 5, 6 ........................: Querrille
- 7, 8 ............................: Umfangsrille
- 9, 10..........................: Einschnitt
- 10a, 10b, 10c ............: Abschnitt
- 10'b, 10"b, 10'''b....: Teilabschnitt
- 10'c, 10"c, 10'''c .....: Teilabschnitt
- B ...............................: Breite
- m...............................: Mittellinie
- α ...............................: Winkel
- c ................................: Länge

## Patentansprüche

1. Fahrzeugluftreifen, insbesondere für den Einsatz unter winterlichen Fahrbedingungen, mit einem Laufstreifen, welcher zumindest eine Profilblockreihe (1, 2, 3) aufweist, deren Profilblöcke (1a, 2a, 3a) in Umfangsrichtung durch Querrillen (4, 5, 6) voneinander getrennt sind, wobei Profilblöcke (2a, 3a) mit zumindest zwei Einschnitten (10) vorgesehen sind, die sich zumindest im Wesentlichen parallel zueinander und zu den von den Querrillen (4, 5) begrenzten Profilblockkanten erstrecken, wobei Profilblöcke (2a, 3a) mit Einschnitten (10) vorgesehen sind, die jeweils ausgehend von einer in Erstreckungsrichtung des Einschnittes (10) verlaufenden Mittellinie (m) abwechselnd einen in die eine Umfangsrichtung und einen in die andere Umfangsrichtung weisenden, entlang der Seiten und der einen Grundlinie eines im Wesentlichen gleichschenkeligen Trapezes verlaufenden Abschnitt (10b, 10c) aufweisen, wobei die Mittellinie (m) die zweite, längere Grundlinie der Trapeze bildet, **dadurch gekennzeichnet,**
**dass** entlang der Seiten der Trapeze Teilabschnitte (10'b, 10'''b, 10'c, 10'''c) des Abschnittes (10b, 10c) des Einschnittes (10) verlaufen, welche miteinander einen Winkel (α) von 110° bis 130° einschließen.

2. Fahrzeugluftreifen nach Anspruch 1, **dadurch gekennzeichnet, dass** entlang der Grundlinie der Trapeze jeweils ein Teilabschnitt (10"b, 10"c) des Abschnittes (10b, 10c) des Einschnittes (10) verläuft, welcher eine Länge (c) von 3,5 mm bis 6,5 mm aufweist.

3. Fahrzeugluftreifen nach Anspruch 1 oder 2, **dadurch gekennzeichnet, dass** die trapezförmig verlaufenden Abschnitte (10b, 10c) unmittelbar aneinander anschließen, wobei ihre ineinander übergehenden Teilabschnitte (10'''b, 10'c) einen einheitlich gerade verlaufenden Abschnitt bilden.

## Claims

1. Pneumatic vehicle tyre, in particular for use in winter driving conditions, with a tread, which has at least one row of tread bars (1, 2, 3), the tread bars (1a, 2a, 3a) of which are separated from one another in the circumferential direction by transverse grooves (4, 5, 6), wherein tread bars (2a, 3a) with at least two sipes (10) are provided, the sipes extending at least substantially parallel to one another and to the tread bar edges bounded by the transverse grooves (4, 5), wherein tread bars (2a, 3a) with sipes (10) are provided, the sipes respectively having portions (10b, 10c) which, taken from a centre line (m) running in the direction of extent of the sipe (10), alternately run in one circumferential direction and in the other circumferential direction, along the sides and the one baseline of a substantially isosceles trapezium, wherein the centre line (m) forms the second, longer baseline of the trapezium,
**characterized**
**in that** subportions (10'b, 10'''b, 10'c, 10'''c) of the portion (10b, 10c) of the sipe (10) run along the sides of the trapezium and form an angle (α) of 110° to 130° with one another.

2. Pneumatic vehicle tyre according to Claim 1,
**characterized in that** a subportion (10"b, 10"c) of the portion (10b, 10c) of the sipe (10) that has a length (c) of 3.5 mm to 6.5 mm runs along the baseline of the trapezium.

3. Pneumatic vehicle tyre according to Claim 1 or 2,
**characterized in that** the portions (10b, 10c) running in the form of a trapezium directly adjoin one another, wherein their merging subportions (10'''b, 10'c) form a uniformly straight-running portion.

## Revendications

1. Pneumatique de véhicule, en particulier pour l'utilisation dans des conditions de conduite hivernales, comprenant une bande de roulement qui présente au moins une rangée de blocs profilés (1, 2, 3), dont les blocs profilés (1a, 2a, 3a) sont séparés les uns des autres dans la direction périphérique par des rainures transversales (4, 5, 6), des blocs profilés (2a, 3a) étant pourvus d'au moins deux entailles (10) qui s'étendent au moins essentiellement parallèlement les unes aux autres et aux arêtes des blocs profilés délimitées par les rainures transversales (4, 5), des blocs profilés (2a, 3a) étant pourvus d'entailles (10) qui présentent à chaque fois, à partir d'un axe médian (m) s'étendant dans la direction d'étendue de l'entaille (10), en alternance une portion (10b, 10c) orientée dans une direction périphérique et une portion (10b, 10c) dans l'autre direction périphérique, qui s'étendent le long des côtés et d'une ligne de base d'un trapèze essentiellement isocèle, l'axe médian (m) formant la deuxième ligne de base plus longue du trapèze, **caractérisé en ce que**
le long des côtés du trapèze s'étendent des portions partielles (10'b, 10'''b, 10'c, 10'''c) de la portion (10b, 10c) de l'entaille (10), lesquelles forment ensemble un angle (α) de 110° à 130°.

2. Pneumatique de véhicule selon la revendication 1, **caractérisé en ce que** le long de la ligne de base du trapèze s'étend à chaque fois une portion partielle (10"b, 10"c) de la portion (10b, 10c) de l'entaille (10), laquelle présente une longueur (c) de 3,5 mm à 6,5 mm.

3. Pneumatique de véhicule selon la revendication 1 ou 2, **caractérisé en ce que** les portions (10b, 10c) s'étendant en forme de trapèze se raccordent directement l'une à l'autre, leurs portions partielles (10'''b, 10'c) se prolongeant l'une dans l'autre formant une portion unitaire droite.
